# EUROPEAN PATENT APPLICATION

(11) **EP 1 993 009 A1**
(43) Date of publication of application: **19.11.2008**
(21) Application number: 07108335.6
(22) Date of filing: 16.05.2007
(51) Int. Cl.: G05B 19/042

(54) **Controller, system, method and computer programs for building control**

(71) Applicant: Tac AB, 213 75 Malmö (SE)
(72) Inventor: Davidsson, Anders, 212 22, MALMÖ (SE); Henriksson, Jan, 245 35, Staffanstorp (SE); Vennerstrand, Anders, 240 14, Veberöd (SE); Wendel, Kristian, 217 42, Malmö (SE); Björck, Sven, 237 34, Bjärred (SE)
(74) Representative: Milanov, Nina Vendela Maria

(57) **Abstract**

A buiIding controI controller (100) comprising
a plurality of control mechanisms (104);
a processor (102) arranged to control operation of said control mechanisms such that each of said control mechanisms are assigned a period of performing operation, respectively, such that each control mechanism repeatedly perform its operation within its assigned period. Further a building control system, a method, and a computer program are disclosed.

## Description

### Technical field

The present invention relates to a controller, a control system, a method, and a computer program for heating, ventilation, and air contitioning (HVAC), security, lighting, asset management, or other facility management control.

### Background of the invention

Controllers and control systems for heating, ventilation, and air contitioning (HVAC), security, lighting, asset management, or other facility management, control are becoming more sophisticated and complex thanks to computer aided control and use of communication technologies. It is therefore a problem to manage these sophisticated and complex controllers and control systems.

### Summary of the invention

In view of the above, an objective of the invention is to solve or at least reduce the problems discussed above. In particular, an objective is to facilitate for a controller to perform a plurality of control tasks in parallel,

In the following, control in relation to heating, ventilation, and air contitioning (HVAC), security, lighting, asset management, or other facility management control will be referred to as 'building control'.

The present invention is based on the understanding that a modern controller for building control is able to perform a plurality of control applications, each being apt to implement a control mechanism solving a control task. To ensure proper operation, i.e. to better use control processing time for control processes with different cycles, the inventors have realized that control applications can be assigned an individual period of repeated operation in sequence to improve parallelism in the controller, wherein the periods are assigned such that each control task is fulfilled. Thus, the inventors have provided an approach where the control mechanism or mechanisms can be adapted for cycles with different periods, where short period processes can be operated better according to their timing constraints, and long period processes can be integrated without unneccesary interference with implementation of the shorter cycle processes.

According to a first aspect of the present invention, there is provided a building control controller comprising a plurality of control mechanisms; and a processor arranged to control operation of said control mechanisms such that each of said control mechanisms are assigned a period of performing operation, respectively, such that each control mechanism repeatedly perform its operation with its assigned period.

The processor may be further arranged to determine a control mechanism that is not able to perform its operation within said assigned period. The processor may be arranged to provide a notification on said determined control mechanism.

The mechanisms may be grouped into groups in which control mechanisms have same assigned period, The control mechanisms in each group may be ordered within the group such that sequence of operation is performed based on said ordering. The ordering may be automatically performed based on attributes of said control mechanisms. The ordering may be performed based on user interaction. By sequential operating control mechanisms having the same period, real-time operation of the control mechanisms of each control mechanism in the group is facilitated as load on the controller's computing resources is smoothed.

The controller may comprise a real-time operating system arranged to enable parallel operation of said control mechanisms. The real-time operating system will then be an arbiter of the parallel operations in the computing resources of the controller.

A control mechanism may be removable during operation. A control mechanism may be exchangable during operation. A period of a control mechanism may be re-assignable during operation.

The control mechanisms may be executed by said processor. Thus, the control mechanisms may be executed by the processor controlling operation, or alternatively by one or more other processors, such as dedicated signal or control processors. Thus, the computing resources of the controller may comprise one or more processors.

According to a second aspect of the present invention, there is provided a control system comprising a controller according to the first aspect of the present invention and at least one control object being controlled by said controller.

According to a third aspect of the present invention, there is provided a method for a building control controller, the method comprising assigning a period of operation to each of a plurality of control mechanisms; and operating said plurality of control mechanisms according to said assigned periods such that each control mechanism repeatedly perform its operation with its assigned period.

The method may further comprise determining a control mechanism that is not able to perform its operation within said assigned period. The method may further comprise providing a notification on said determined control mechanism,

The method may further comprise grouping said control mechanisms into groups in which control mechanisms have same assigned period. The method may further comprise ordering said control mechanisms within said group; and sequentially operating said control mechanisms of the group based on said ordering. The method may further comprise determining an attribute of each of said control mechanisms, such that said ordering is based on said determined attributes. The method may further comprise enabling user interaction such that said ordering is based on said user interaction.

The method may comprise enabling parallel operation of said control mechanisms by a real-time operating system.

The method may comprise removing one of said control mechanisms during operation. The method may comprise exchanging one of said control mechanisms during operation. The method may comprise re-assinging a period of one of said control mechanisms during operation.

The method may comprise simulating operation of said control mechanisms; and determining if operation according to assigned periods is enabled.

According to a fourth aspect of the present invention, there is provided a computer program comprising program code means adapted to perform the method according to the fourth aspect of the present invention when the program is executed by a processor.

Generally, all terms used in the claims are to be interpreted according to their ordinary meaning in the technical field, unless explicitly defined otherwise herein. All references to "a/an/the [element device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

Other objectives, features and advantages of the present invention will appear from the following detailed disclosure, from the attached dependent claims as well as from the drawings,

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a block diagram schematically illustrating a controller according to an embodiment of the present invention:
Fig. 2 is a block diagram illustrating a controller connected to an operator tool according to an embodiment of the present invention;
Fig. 3 is a block diagram illustrating a controller with an integrated operator tool according to an embodiment of the present invention:
Fig. 4 illustrates a computer readable medium on which a data structure for a controller is stored;
Fig. 5 illustrates a computer readable medium on which a data structure for an operator tool apparatus is stored;
Fig. 6 is a flow chart illustrating a method according to an embodiment of the present invention;
Fig. 7 is a flow chart illustrating a procedure for ordering control mechanisms for operation;
Fig. 8 schematically illusttrates modules for amending a control mechanism of a controller;
Fig. 9 is a time scheme illustrating operation of five control applications;
Fig. 10 is an exemplary multitasking diagram;
Fig. 11 is an exemplary multitasking diagram;
Fig. 12 is a time scheme illustrating operation of five control applications;
Fig. 13 is an exemplary multitasking diagram;
Fig. 14 is an exemplary multitasking diagram: and
Fig. 15 schematically illustrates a control system according to an embodiment of the present invention.

### Detailed description of preferred embodiments

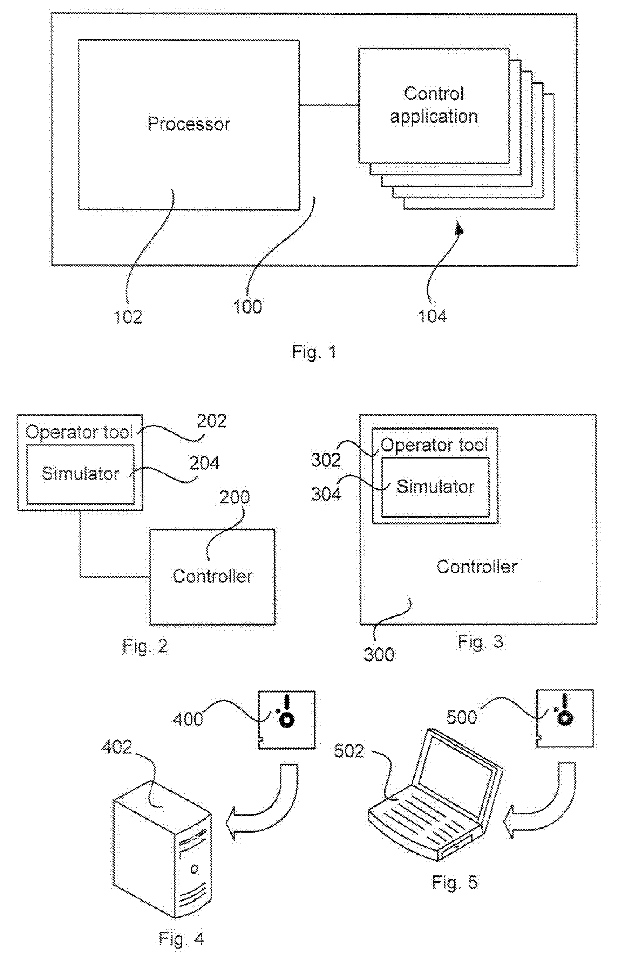

Fig. 1 is a block diagram schematically illustrating a controller 100 comprising a processor 102 and a plurality of control applications 104. The processor 102 control operation of the control applications 104, which can be executed either within the processor 102, or within one or more dedicated such as or control processors (nor shown), or a combination thereof. The control of the control applications 104 is performed by assigning a period for repeated execution of each control application 104 such that control tasks of the control applications 104 are virtually performed in parallel. This can be performed by using a real-time operating system arbiting different computing tasks of said control mechanisms to enable parallel operation. Different control applications can thus be assigned different periods depending on the nature of the control application and its control task, at least as long as each control task is fulfilled during its period, i.e. there is computing power enough for all control mechanisms. It is therefore understood that by assigning a shorter period for a control application, the control application will consume more computing power of the controller. If a control mechanism is not able to perform its control task during its assigned period, i.e. before the control mechanism is supposed to start performing the control task next time, the control mechanism can be forced to wait until next period for performing its control task. Therefore, the assignment of periods for the control applications is a delicate design parameter for the An optional simulator can therefore be provided for simulating operations of the contro!!er according to assigned periods to check if computer power of computing resources of the controller is enough for the control applications and their assigned periods, In this simulation, an estimated effective duration for each period that a application is operating is preferably provided. This can be based on calculations statistics from previous operations, or operator assigned based on experience and skills of the operator, or a combination of these. Further, the control applications can be grouped into groups based on the assigned periods, and the control applications within each group can be ordered based on an attribute of the control application, This ordering can be used to avoid shortage of processing power, where control with the same assigned period can be sequentially operated to smoothen load on the computing resources. An example of these features of the control applications is schematically illustrated in Table 1. The number of control applications are normally larger in a modern controller, but can also be less, depending on the control tasks to be handled. Further, the attributes of the control applications can be denoted in a number of ways, wherein Table 1 only illustrates one exemplary way.

**Table 1. Features of present control applications**

| Control application | Assigned period | Estimated time | Attribute |
|---|---|---|---|
| A | 10 ms | 2 µs | order I |
| B | 10 ms | 3 µs | order II |
| C | 25 ms | 5 µs | order I |
| D | 200 ms | 20 µs | order I |
| E | 500 ms | 20 µs | order I |

A super-period can be considered, whithin which the controller has performed all control tasks at least once. This super-period depends on the longest assigned period. After a super-period has passed, the controller can be considered to start again with its set of control tasks,

Fig. 2 is a block diagram illustrating a controller 200 connected to an operator tool 202. The controller can have any of the features discussed with reference to Fig. 1. For example, the operator tool 402 can comprise a simulator 204 for simulating operation of the controller 200, The operator tool 202 can be connected by wire or wirelessly to the controller 200, and connectors can also be provided via a communication network (not shown) and by any proper communication technique. As disclosed in Fig. 3, a controller 300 can have an integrated operator tool 302, and the operator tool 302 can optionally have a simulator 304. Apart from the integrated implementation illustrated by the embodiment of Fig. 3, the features and functions of the elements 300, 302, 304 are similar to those demonstrated for elements 200, 202, 204 with reference to Fig. 2.

In Figs 1, 2 and 3, not to obscure the inventive concept, no inputs or outputs of the controllers have been illustrated, neither have any control objects been illustrated. However, as can be readily understood by a person skilled in the art, each control mechanism implemented through the demonstrated control applications is provided with inputs and outputs, and connections to their objects, such as valves, relays, motors, etc., for fulfilling its control task.

Fig. 4 illustrates a computer readable medium 400 on which a data structure is stored. The data structure comprises control instructions for causing a controller 402 to perform the features described above with reference to any of Figs 1, 2 and/or 3, or any of the features of the method described below.

Fig. 5 illustrates a computer readable medium 500 on which a data structure is stored. The data structure comprises control instructions for causing an operator tool apparatus 502 to perform the features described above with reference to any of Figs 2 or 3, or any of the features of the method described below.

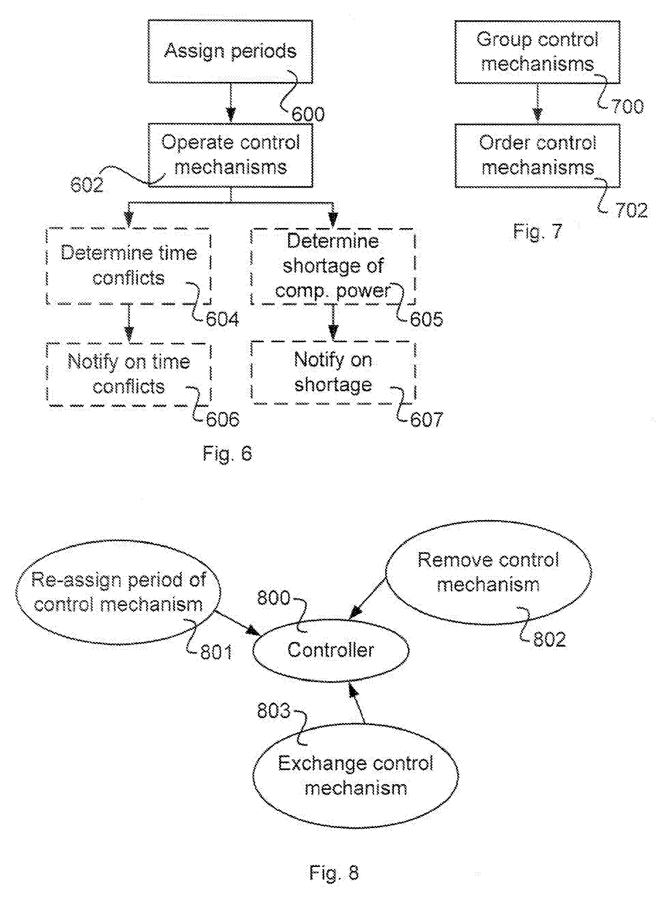

Fig. 6 is a flow chart illustrating a method according to an embodiment of the present invention. In a period assignment step 600, a period is assigned to each of a plurality of control mechanisms, respectively. The periods are selected either by an operator, optionally assisted by an operator tool, or automatically, such that a control task of each control mechanism is performed periodically with the assigned period. By assigning different periods to the different control mechanisms, depending on their nature, proper operation is achieved in conjunction with the control tasks that are present. In a control mechanism operation step 602, the control mechanisms are operated according to the assigned periods. If the periods are properly set, and the processing power of one or more processors driving control processes associated with the control mechanisms is enough, each control mechanism is able to perform its operation within its assigned period.

However, if any of the control mechanisms is not able to perform its control task within its assigned period, a time conflict might occur, Therefore. in optional time conflict determination step 604, any time conflict is determined. This can be performed by monitoring operation of the running control and from states of the control mechanisms, when any of the control mechanisms are scheduled to start operating next time, i.e. according to assinged periods, see if the control mechanism is ready with its control task. If a time conflict is determined, i.e. any control mechanism is not ready within its assigned period, the time conflict can be notified in an optional time conflict notification step 606. The notification can be provided to a user, or to a time conflict handler automatically reserving time conflicts by adjusting periods, processor allocation, or adaption of the control mechanism for periodical operation.

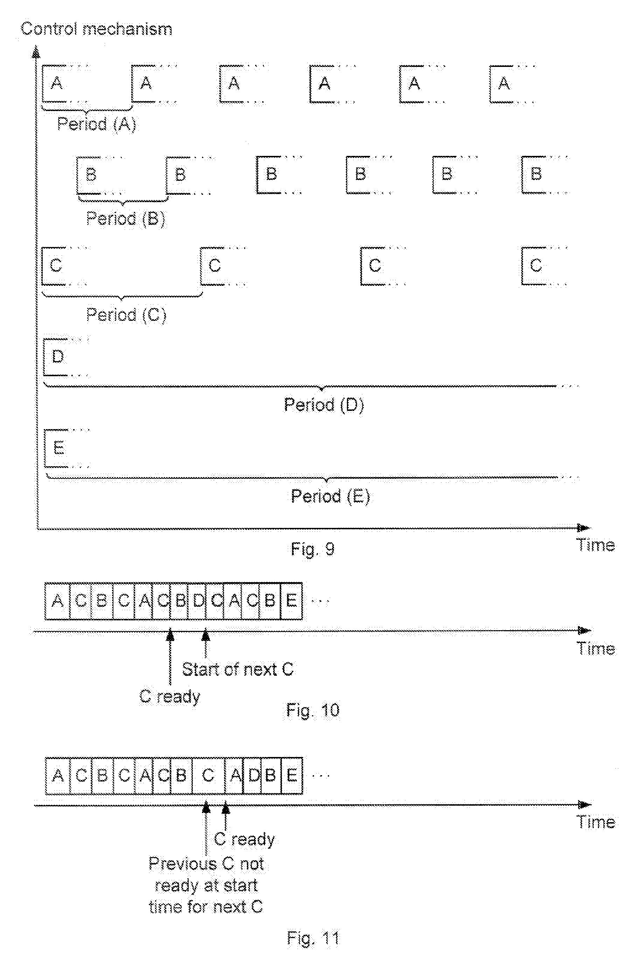

Further, if computing power consumption of the control mechanisms is above a limit of available computing power of computing resources of the operation of the control mechanisms may be affected, such as delays, optional computer power shortage determining step 605, it is determined if available computing power is not enough to provide parallel operation of the control mechanisms that are to perform their periodic task. Such a computer power shortage can occur depending on heavy load from control mechanisms, but can also occur depending on shared computing resources with other functions, such as communication functions. Optionally, the determined shortage of computer power can be notified in a shortage notification step 607. An example how such a shortage may be resoled by re-assigning periods of any of the control mechanisms will be illustrated below with reference to Figs 9 to 14.

Fig. 7 is a flow chart illustrating a procedure for ordering control mechanisms for operation. In a control mechanism grouping step 700, the control mechanisms are grouped, e.g. based on their assigned periods. In a control mechanism ordering step 702, the control mechanisms within each group is ordered. The ordering can be based on an attribute of each control mechanism. The ordering is then used to sequentially operate the control mechanisms of the group to smoothen computer power consumption, and/or to resolve or avoid time conflicts.

Fig. 8 schematically illustrates modules 801, 802, 803 for amending a control mechanism of a controller 800. For example, a module 801 for re-assigning a period of the control mechanism enables assignment of an amended period. A module 802 for removing a control mechanism enables deletion of the control mechanism, e.g. if the control task of the control mechanism no longer exists. A module 803 for exchanging the control mechanism for another will enable replacement of a control mechanism, e.g. if the control task has changed.

Fig. 9 is a time scheme illustrating operation of five control applications A, B, C, D, and E each assigned a period Period (A), Period (B), Period (C), Period (D), and Period (E), respectively, denoting period of repeated operation of the control applications A, B, C, D, E to achieve parallel control operation of a controller holding and executing the control applications. The lack of witdth of the rectangles illustrating the control applications A, B, C, D, E in Fig. 9 denotes that time for performing the operation of the control application within each period can vary. This time can be deterministic or stochastic, depending on the control task. The stochastic case can require some extra considerations upon any simulation, which will be further discussed below, of operation of the control application. One way of gaining knowledge of the stochastic case is to continously determine statistics on consumed time, and from these statistics make an estimation on expected time requirement of the control application. Another way is to provide a notification when time consumption of the stochastic time consuming control application causes any time conflicts between control applications that may depend on each other. When handing these types of issues, the ordering of the control applications can be used for prioritizing operation of control applications that have impact on the other control applications.

Fig. 10 is an exemplary multitasking diagram for the operation illustrate in Fig. 9 as the processes are handled by a real-time operating system of the controller. Control task C is particularly observed in this example, where we see that control task C is given three processing slots, among the slots given to the other control tasks, and then the control task C is fulfilled for that period, and before the end of Period (C).

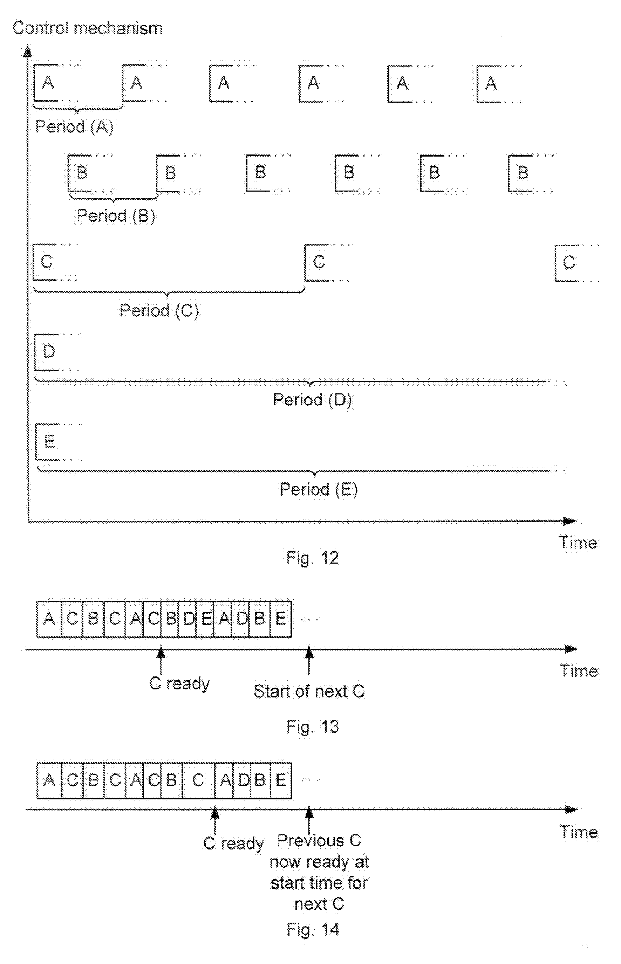

Fig. 11 is an exemplary multitasking diagram for the operation illustrated in Fig. 9 as the processes are handled by a real-time operating system of the controller. Also here, control task C is particularly observed. where we see that control task C is given four processing slots, among the slots given to the other control tasks. However, in this example, when control task C is ready, the Period (C) is already gone, and next operation of the control task C were supposed to start before control task C was ready. Since control task C was not ready at next start, there can not be any operation of control task C during the next Period (C). As demonstrated above, an optional monitoring of this to determine the time conflict, and further optional notification on this can then be done. As a consequence, measures to handle this can be taken. One measure can be to change Period (C), i.e. extend Period (C), as is illustrated with reference to Fig. 12, which is a time scheme illustrating operation of the five control applications A, B, C, D, and E. Fig. 13 is an exemplary multitasking diagram for the operation illustrated in Fig, 12 as the processes are handled by a real-time operating system of the controller. Control task C is particularly observed in this example, where we see that control task C is given three processing slots, Le, an assumption that the load is similar to the example illustrated with reference to Fig. 10, among the slots, given to the other control tasks, and then the control task C is fulfilled for that period, and before the end of Period (C).

Fig. 14 is an exemplary multitasking diagram for the operation illustrated in Fig. 12 as the processes are handled by a real-time operating system of the controller. Also here, control task C is particularly observed, where we see that control task C is given four processing slots, i.e. an assumption that the load is similar to the example illustrated with reference to Fig. 11, among the slots given to the other control tasks. Contrary to the example of Fig. 11, control task C is now ready within the Period (C), which is extended, and no time conflict occurs.

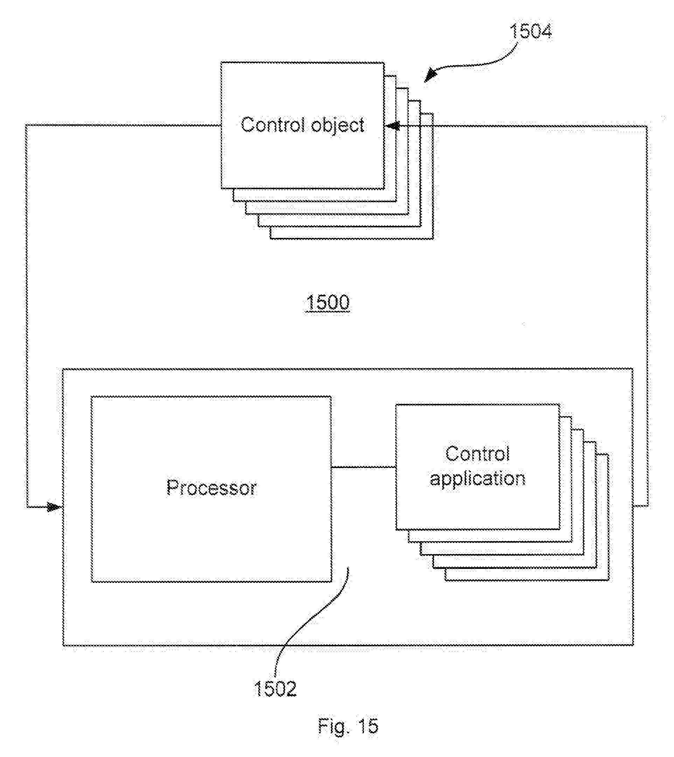

Fig. 15 is a schematic diagram of a building control system 1500 according to an embodiment of the present invention. A building control controller 1502 is arranged to control one or more control objects 1504.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A building control controller comprising
a plurality of control mechanisms;
a processor arranged to control operation of said control mechanisms such that each of said control mechanisms are assigned a period of performing operation, respectively, such that each control mechanism repeatedly perform its operation with its assigned period,

2. The controller according to claim 1, the processor being further arranged to determine a control mechanism that is not able to perform its operation within said assigned period,

3. The controller according to claim 2, wherein said processor is arranged to provide a notification on said determined control mechanism.

4. The controller according to any of claim 1 to 3, wherein said control mechanisms are grouped into groups in which control mechanisms have same assigned period,

5. The controller according to claim 4, wherein control mechanisms in each group are ordered within the group such that a sequence of operation is performed based on said ordering.

6. The controller according to claim 5, wherein said ordering is automatically performed based on attributes of said control mechanisms.

7. The controller according to claim 5, wherein said ordering is performed based on user interaction.

8. The controller according to any of claims 1 to 7, further comprising a real-time operating system arranged to enable parallel operation of said control mechanisms.

9. The controller according to any of claims 1 to 8, wherein a control mechanism is removable during operation.

10. The controller according to any of claims 1 to 9, wherein a control mechanism is exchangable during operation.

11. The controller according to any of claims 1 to 10, wherein a period of a control mechanism is re-assignable during operation,

12. The controller according to any of claims 1 to 11. wherein said mechanisms are executed by said processor.

13. A control system comprising
a controller according to any of claims 1 to 12; and
at least one control object being controlled by said controller.

14. A method for a building control controller, the method comprising
assigning a period of operation to each of a plurality of control mechanisms; and
operating said plurality of control mechanisms according to said assigned periods such that each control mechanism repeatedly perform its operation with its assigned period.

15. The method according to claim 14, further comprising determining a control mechanism that is not able to perform its operation within said assigned period.

16. The method according to claim 15, further comprising providing a notification on said determined control mechanism,

17. The method according to any of claims 14 to 18, further comprising grouping said control mechanisms into groups in which control mechanisms have same assigned period.

18. The method according to claim 17, further comprising
ordering said control mechanisms of said group; and
sequential operating said control mechanisms based on said ordering.

19. The method according to claim 18, further comprising determining an attribute of each of said control mechanisms, such that said ordering is based on said determined attributes.

20. The method according to claim 18, further comprising enabling user interaction such that said ordering is based on said user interaction.

21. The method according to any of claims 14 to 20, further comprising enabling parallel operation of said control mechanisms by a real-time operating system,

22. The method according to any of claims 14 to 21, further comprising removing one of said control mechanisms during operation.

23. The method according to any of claims 14 to 22, further comprising exchanging one of said control mechanisms during operation,

24. The method according to any of claims 14 to 23, further comprising re-assinging a period of one of said control mechanisms during operation.

25. The method according to any of claims 14 to 24, further comprising simulating operation of said control mechanisms; and determining if operation according to assigned periods is enabled.

26. A computer program comprising program code means adapted to perform the method according to any of claims 14 to 25 when the program is executed by a processor.
